# EUROPEAN PATENT APPLICATION

(11) **EP 4 621 592 A1**
(43) Date of publication of application: **24.09.2025**
(21) Application number: 24806502.1
(22) Date of filing: 11.05.2024
(51) Int. Cl.: G06F 16/27

(54) **SPORTS DATA SYNCHRONIZATION METHOD AND ELECTRONIC DEVICE**

(30) Priority: 18.05.2023 CN 202310566390; 29.05.2023 CN 202310621858
(71) Applicant: Huawei Technologies Co., Ltd., Shenzhen, Guangdong 518129 (CN)
(72) Inventor: CHEN, Shengyan, Shenzhen Guangdong 518129 (CN); MU, Tong, Shenzhen Guangdong 518129 (CN); CAI, Bingying, Shenzhen Guangdong 518129 (CN); CHEN, Zhe, Shenzhen Guangdong 518129 (CN); BAI, Fei, Shenzhen Guangdong 518129 (CN)
(74) Representative: Isarpatent
(86) International application number: PCT/CN2024/092579
(87) International publication number: WO 2024/235150

(57) **Abstract**

This application provides a motion data synchronization method and an electronic device. The method may include: A first electronic device determines first motion data, and a second electronic device determines second motion data; when a preset condition is met, the first electronic device fuses the first motion data and the second motion data according to a fusion rule, to obtain third motion data; the first electronic device sends the third motion data to the second electronic device; and the first electronic device and the second electronic device respectively refresh display interfaces based on the third motion data. This technical solution allows motion data displayed on the first electronic device and motion data displayed on the second electronic device to be the same.

## Description

This application claims priorities to Chinese Patent Application No. 202310566390.8, filed with the China National Intellectual Property Administration on May 18, 2023 and entitled "MOTION DATA SYNCHRONIZATION METHOD AND APPARATUS", and to Chinese Patent Application No. 202310621858.9, filed with the China National Intellectual Property Administration on May 29, 2023 and entitled "MOTION DATA SYNCHRONIZATION METHOD AND ELECTRONIC DEVICE", both of which are incorporated herein by reference in their entireties.

### TECHNICAL FIELD

Embodiments of this application relate to the field of electronic technologies, and more specifically, to a motion data synchronization method and an electronic device.

### BACKGROUND

Currently, a user pays more attention to daily motion data of the user. A plurality of electronic devices may be configured to collect motion data of the user. For example, both a mobile phone and a sports watch of the user may collect the motion data of the user. However, motion data about the same user on the mobile phone and the sports watch may be different due to a plurality of reasons.

### SUMMARY

Embodiments of this application provide a motion data synchronization method and an electronic device. This technical solution allows motion data displayed on a first electronic device and motion data displayed on a second electronic device to be the same.

According to a first aspect, a motion data synchronization method is provided, where the method is applied to a first electronic device, and the method includes: determining first motion data; when a first preset condition is met, fusing, by the first electronic device, the first motion data and second motion data according to a fusion rule, to obtain third motion data, where the second motion data is motion data determined by a second electronic device; and sending the third motion data to the second electronic device.

Based on this embodiment of this application, the first electronic device may be configured to determine the first motion data. When the first preset condition is met, the first electronic device fuses the first motion data and the second motion data according to the fusion rule, to obtain the third motion data; and send the third motion data to the second electronic device.

In this technical solution, the motion data in the first electronic device and the motion data in the second electronic device may be consistent, so that a user may view the same motion data in the first electronic device and the second electronic device, thereby helping improve user experience.

With reference to the first aspect, in an implementation of the first aspect, that the first electronic device fuses the first motion data and second motion data according to a fusion rule, to obtain third motion data includes: if the first electronic device supports viewing of detailed motion data, and there are both the first motion data and the second motion data in a target minute, using data corresponding to the target minute in the second motion data as data in the target minute in the third motion data; if there is only the first motion data or the second motion data in a target minute, using data corresponding to the target minute in the first motion data or the second motion data as data in the target minute in the third motion data; or if the first electronic device does not support viewing of detailed motion data, using a larger one of the first motion data and the second motion data as the third motion data.

In this embodiment of this application, for an electronic device that supports viewing of detailed motion data, for motion data in a same minute, if there are both the motion data in the first electronic device and the motion data in the second electronic device, the motion data in the second electronic device is used, or if there is only data in one electronic device, the motion data in the electronic device is used. For an electronic device that does not support viewing of detailed motion data, larger data is used as the third motion data. In this technical solution, the first electronic device may use different motion data fusion manners for different cases, so that fused data may be more accurate, and may better reflect an actual motion status of the user.

With reference to the first aspect, in an implementation of the first aspect, if the second motion data includes motion data of a plurality of second electronic devices, that the first electronic device fuses the first motion data and second motion data according to a fusion rule, to obtain third motion data includes: if there are both the first motion data and the second motion data in a target minute, using motion data of a second electronic device with a largest medium access control MAC address as data in the target minute in the third motion data.

In this embodiment of this application, if there is the motion data of the plurality of second electronic devices, when the first electronic device performs data fusion, in a same minute, the motion data in the second electronic device with the largest MAC address is used.

Because an MAC address of a newly produced electronic device is large, a motion sensor used by the newly produced electronic device may also be advanced, so that motion data obtained by the first electronic device during motion data fusion may be more accurate.

With reference to the first aspect, in an implementation of the first aspect, the first preset condition is that the first electronic device determines that a variation of the first motion data is greater than a preset value, and before the first electronic device fuses the first motion data and the second motion data according to the fusion rule, the method further includes: determining a user type based on a user profile; and when it is determined that the user type is a first type, determining that the preset value is a first preset value; or when it is determined that the user type is not a first type, determining that the preset value is a second preset value, where the first preset value is less than the second preset value.

In this embodiment of this application, different user types may correspond to different preset values, so that a variation of the motion data may be dynamically adjusted, thereby improving flexibility of motion data synchronization.

With reference to the first aspect, in an implementation of the first aspect, the first preset condition is that the first electronic device receives the second motion data sent by the second electronic device.

In this embodiment of this application, when receiving the second motion data sent by the second electronic device, the first electronic device may fuse the motion data, so that fused motion data may better reflect a motion status of the user.

With reference to the first aspect, in an implementation of the first aspect, the first preset condition is that the first electronic device detects an operation of starting a home page of a target application by a user or an operation of pulling down to refresh a home page of a target application by a user, before the first electronic device fuses the first motion data and second motion data according to the fusion rule, the method further includes: sending a motion data synchronization request to the second electronic device; and receiving the second motion data sent by the second electronic device.

In this embodiment of this application, when the user performs the operation of starting the home page of the target application or pulls down to refresh the home page of the target application, motion data synchronization may be triggered, so that the motion data presented by the first electronic device to the user may be more accurate.

With reference to the first aspect, in an implementation of the first aspect, the third motion data includes detailed motion data within preset duration and summary motion data on a current day.

In this embodiment of this application, the third motion data may include data of a plurality of data types, so that the motion data may be presented to the user from a plurality of perspectives.

With reference to the first aspect, in an implementation of the first aspect, the third motion data includes detailed motion data within each preset duration of a first preset quantity of days and summary motion data of each day of a second preset quantity of days.

In this embodiment of this application, the third motion data may include data of a plurality of data types, so that the motion data may be presented to the user from a plurality of perspectives.

With reference to the first aspect, in an implementation of the first aspect, the method further includes: refreshing a display interface of the first electronic device based on the third motion data.

In this technical solution, motion data displayed on the display interface of the first electronic device and motion data displayed on a display interface of the second electronic device may be consistent.

With reference to the first aspect, in an implementation of the first aspect, the method further includes: in response to an operation of modifying target motion data, determining whether a timestamp of modified second target motion data is greater than a timestamp of stored first target motion data; if it is determined that the timestamp of the second target motion data is greater than the timestamp of the first target motion data, sending the second target motion data to the second electronic device; and refreshing the display interface of the first electronic device based on the second target motion data.

Based on this embodiment of this application, when the user modifies the target motion data in the first electronic device, the modified target motion data may be automatically synchronized to the second electronic device, so that the target motion data displayed on the plurality of electronic devices of the user is consistent.

With reference to the first aspect, in an implementation of the first aspect, the method further includes: receiving second target motion data sent by the second electronic device; and if it is determined that a timestamp of the second target motion data is less than or equal to a timestamp of stored first target motion data, sending the first target motion data to the second electronic device; or if it is determined that a timestamp of the second target motion data is greater than a timestamp of first target motion data, refreshing the display interface of the first electronic device based on the second target motion data.

Based on this embodiment of this application, when the user modifies the target motion data in the second electronic device, the modified target motion data may be automatically synchronized to the first electronic device, so that the target motion data displayed on the plurality of electronic devices of the user is consistent.

With reference to the first aspect, in an implementation of the first aspect, the first electronic device stores first historical target motion data, and the method further includes: receiving second historical target motion data sent by the second electronic device; determining whether smallest target motion data on each historical day in the first historical target motion data and the second historical target motion data is the first historical target motion data; and if it is determined that the smallest target motion data is the first historical target motion data, sending the smallest target motion data to the second electronic device; or if it is determined that the smallest target motion data is not the first historical target motion data, refreshing the display interface of the first electronic device based on the smallest target motion data.

Based on this embodiment of this application, historical target data in the first electronic device and historical target data in the second electronic device may be consistent.

According to a second aspect, a motion data synchronization method is provided. The method is applied to a second electronic device, and the method includes: determining second motion data; when a second preset condition is met, sending the second motion data to a first electronic device; and receiving third motion data sent by the first electronic device, where the third motion data is motion data obtained by the first electronic device by fusing first motion data and the second motion data according to a fusion rule.

Based on this embodiment of this application, the second electronic device may be configured to: determine the second motion data; and when the second preset condition is met, the second electronic device sends the second motion data to the first electronic device, and receive the third motion data sent by the first device.

In this technical solution, the motion data in the first electronic device and the motion data in the second electronic device may be consistent, so that a user may view the same motion data in the first electronic device and the second electronic device, thereby helping improve user experience.

With reference to the second aspect, in an implementation of the second aspect, the second preset condition is that the second electronic device determines that a variation of the second motion data is greater than a preset value, and before the sending the second motion data to a first electronic device, the method further includes: determining a user type based on a user profile; and when it is determined that the user type is a first type, determining that the preset value is a first preset value; or when it is determined that the user type is not a first type, determining that the preset value is a second preset value, where the first preset value is less than the second preset value.

In this embodiment of this application, different user types may correspond to different preset values, so that a variation of the motion data may be dynamically adjusted, thereby improving flexibility of motion data synchronization.

With reference to the second aspect, in an implementation of the second aspect, the second preset condition is that the second electronic device detects that the second electronic device and the first electronic device change from a wireless disconnection state to a wireless connection state; or the second preset condition is that the second electronic device receives a motion data synchronization request sent by the first electronic device.

With reference to the second aspect, in an implementation of the second aspect, the method further includes: refreshing a display interface of the second electronic device based on the third motion data.

In this embodiment of this application, motion data displayed on a display interface of the first electronic device and motion data displayed on the display interface of the second electronic device may be consistent.

With reference to the second aspect, in an implementation of the second aspect, the method further includes: receiving target motion data sent by the first electronic device; and refreshing the display interface of the second electronic device based on the target motion data.

In this technical solution, target motion data displayed on the first electronic device and target motion data displayed on the second electronic device may be consistent.

With reference to the second aspect, in an implementation of the second aspect, the method further includes: receiving historical target motion data sent by the first electronic device; and refreshing the display interface of the second electronic device based on the historical target motion data.

Based on this embodiment of this application, historical target data in the first electronic device and historical target data in the second electronic device may be consistent.

According to a third aspect, an electronic device is provided, including one or more processors and one or more memories. The one or more memories store one or more computer programs. The one or more computer programs include instructions. When the instructions are executed by the one or more processors, the motion data synchronization method according to any one of the first aspect or the possible implementations of the first aspect is performed.

According to a fourth aspect, an electronic device is provided, including one or more processors and one or more memories. The one or more memories store one or more computer programs. The one or more computer programs include instructions. When the instructions are executed by the one or more processors, the motion data synchronization method according to any one of the second aspect or the possible implementations of the second aspect is performed.

According to a fifth aspect, an apparatus is provided, including modules configured to implement the motion data synchronization method according to any one of the first aspect, the second aspect, and the possible implementations of the first aspect and the second aspect.

According to a sixth aspect, a chip is provided. The chip includes a processor and a communication interface. The communication interface is configured to receive a signal, and transmit the signal to the processor. The processor processes the signal, so that the motion data synchronization method according to any one of the first aspect and the possible implementations of the first aspect is performed.

According to a seventh aspect, a chip is provided. The chip includes a processor and a communication interface. The communication interface is configured to receive a signal, and transmit the signal to the processor. The processor processes the signal, so that the motion data synchronization method according to any one of the second aspect and the possible implementations of the second aspect is performed.

According to an eighth aspect, a readable storage medium is provided. The readable storage medium stores instructions. When the instructions are run on an electronic device, the motion data synchronization method according to any one of the first aspect and the possible implementations of the first aspect is performed.

According to a ninth aspect, a readable storage medium is provided. The readable storage medium stores instructions. When the instructions are run on an electronic device, the motion data synchronization method according to any one of the second aspect and the possible implementations of the second aspect is performed.

According to a tenth aspect, a computer program product is provided. The computer program product includes computer program code. When the computer program code is run on a computer, the motion data synchronization method according to any one of the first aspect and the possible implementations of the first aspect is performed.

According to an eleventh aspect, a computer program product is provided. The computer program product includes computer program code. When the computer program code is run on a computer, the motion data synchronization method according to any one of the second aspect and the possible implementations of the second aspect is performed.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3 is a diagram of a scenario to which a motion data synchronization method according to an embodiment of this application is applicable;
FIG. 4 is a schematic flowchart of a motion data synchronization method according to an embodiment of this application;
FIG. 5 is a schematic flowchart of another motion data synchronization method according to an embodiment of this application;
FIG. 6 is an interaction diagram of another motion data synchronization method according to an embodiment of this application;
FIG. 7 is an interaction diagram of another motion data synchronization method according to an embodiment of this application;
FIG. 8 is a schematic flowchart of a target motion data synchronization method according to an embodiment of this application;
FIG. 9 is a schematic flowchart of another target motion data synchronization method according to an embodiment of this application;
FIG. 10 is a schematic flowchart of another historical target data synchronization method according to an embodiment of this application;
FIG. 11A and FIG. 11B are diagrams of display interfaces obtained by synchronizing motion data in a first device with motion data in a second device;
FIG. 12 is a schematic flowchart of a motion data synchronization method according to an embodiment of this application;
FIG. 13 is a schematic flowchart of another motion data synchronization method according to an embodiment of this application; and
FIG. 14 is a block diagram of an electronic device according to an embodiment of this application.

### DESCRIPTION OF EMBODIMENTS

The following describes technical solutions of embodiments in this application with reference to accompanying drawings.

A device dynamic connection method according to embodiments of this application may be applied to electronic devices such as a smartphone, a smart speaker, a smart television, a tablet computer, a notebook computer, a personal computer (personal computer, PC), an ultra-mobile personal computer (ultra-mobile personal computer, UMPC), a netbook, a vehicle-mounted device, a wearable device, and a foldable device, or an internet of things (internet of things, IOT) device.

The wearable device may include a sports watch, a sports band, and the like.

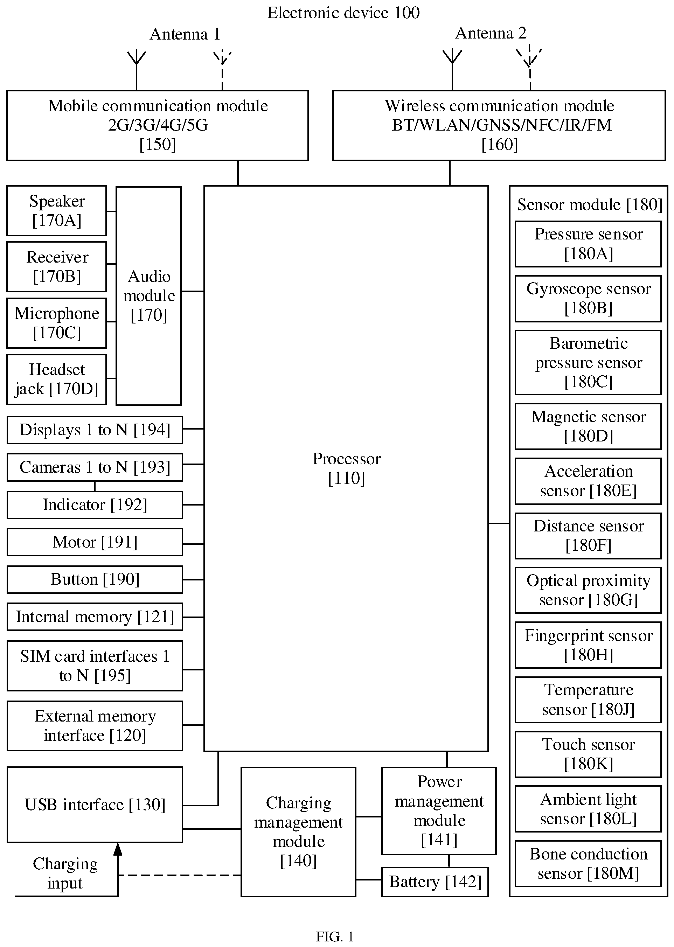

FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by using hardware, software, or a group of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus interface, and/or the like.

The charging management module 140 is configured to receive a charging input from a charger.

The power management module 141 is configured to connect the battery 142, the charging management module 140, and the processor 110.

A wireless communication function of the electronic device 100 may be implemented by using the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G/3G/4G/5G.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. The camera 193 is configured to capture a static image or a video.

The digital signal processor is configured to process a digital signal, and may process another digital signal in addition to the digital image signal.

The video codec is configured to compress or decompress a digital video. The electronic device 100 may support one or more video codecs.

The external memory interface 120 may be used to connect to an external storage card, for example, a micro SD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing.

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyro sensor 180B may be configured to determine a moving posture of the electronic device 100.

The barometric pressure sensor 180C is configured to measure barometric pressure. In some embodiments, the electronic device 100 calculates an altitude through the barometric pressure measured by the barometric pressure sensor 180C, to assist in positioning and navigation.

The acceleration sensor 180E may detect magnitude of acceleration of the electronic device 100 in various directions (usually on three axes).

The distance sensor 180F is configured to measure a distance.

The fingerprint sensor 180H is configured to collect a fingerprint.

The touch sensor 180K is also referred to as a "touch panel". The touch sensor 180K may be disposed on the display 194, and the touch sensor 180K and the display 194 constitute a touchscreen, which is also referred to as a "touch screen".

The bone conduction sensor 180M may obtain a vibration signal.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. In embodiments of this application, an operating system with a hierarchical architecture is used as an example to describe a software structure of the electronic device 100.

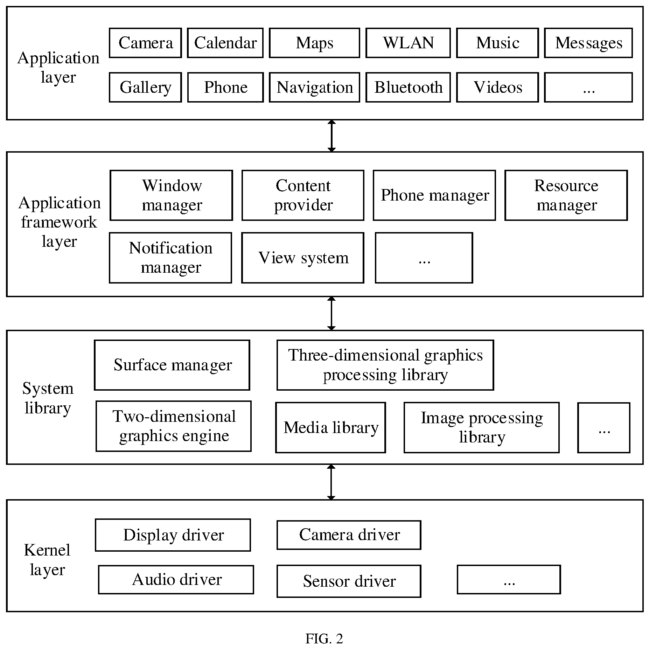

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the operating system is divided into four layers: an application layer, an application framework layer, a system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, Messages, and Wallet.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction.

A kernel library includes two parts: a function to be invoked by a Java language, and a kernel library.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before technical solutions in embodiments of this application are described, some technical terms that may be used in this application are first briefly described as follows.

A user profile is a model that describes user requirements. In this application, the user profile may be used to describe a user's usage a sports and health application. For example, an electronic device may classify users into a heavy user and a non-heavy user based on a frequency of using the sports and health application by the user and a focus of the user.

Foreground: A foreground service can perform some operations that a user can notice. For example, an audio application uses the foreground service to play an audio track. The foreground service needs to display notifications. Even if the user stops interacting with the application, the foreground service continues to run.

Background: A background service performs operations that a user does not notice. For example, if an application uses a service to compress storage space of the application, the service is usually a background service.

Currently, a user pays more attention to daily motion data of the user. A plurality of electronic devices may be configured to collect motion data of the user. For example, both a mobile phone and a sports watch of the user may collect the motion data of the user. However, motion data about the same user on the mobile phone and the sports watch may be different due to a plurality of reasons.

In view of this, this application provides a motion data synchronization method, so that when a plurality of electronic devices are in a wireless connection state, motion data on the plurality of electronic devices for a same user is the same.

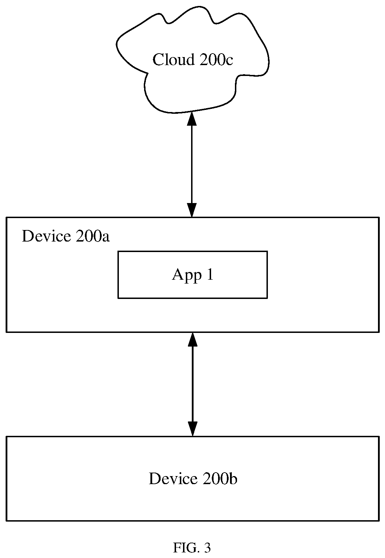

FIG. 3 is a diagram of a scenario to which an embodiment of this application is applicable. As shown in FIG. 3, the scenario may include at least a device 200a, a device 200b, and a cloud 200c. The device 200a may include a sports and health application (Application, App) 1.

In this embodiment of this application, the device 200a and the device 200b may be separately configured to collect motion data of a user. When the device 200a and the device 200b are in a wireless connection state, motion data synchronization between the device 200a and the device 200b is implemented, to implement motion data consistency between the two devices.

The motion data may include data that may represent a motion status of the user, like a step count, calories, a distance, active hours, ascent data, medium- and high-intensity activities, and a heart rate.

For example, the application 1 on the device 200a may be used to: listen to a step count reported by a sensor on the device 200a, and calculate calories, a distance, active hours, medium- and high-intensity activities, and the like based on the step count, or determine ascent data, a heart rate, and the like by using another motion sensor. Similarly, the device 200b may also collect various motion data of the user.

It may be understood that the device 200a may store various collected or calculated motion data in a database, and upload the motion data to the cloud 200c. In addition, the application 1 may further provide various motion data to a user interface (user interface, UI) process in real time, to refresh a display interface of the application 1 for the user to view. Similarly, the device 200b may also provide various motion data to a UI process in real time for the user to view.

In some examples, the user may further set target motion data in the device 200a or the device 200b. For example, the user sets a goal of the step count to 10,000 steps, sets a goal of the motion duration to 30 minutes, and sets a goal of the active hours to 12 times. The cloud 200c may manage and issue various medals of achievement based on daily motion data and the target motion data of the user.

The device 200a may perform motion data fusion on motion data 1 on the device 200a and motion data 2 on the device 200b according to a specific rule, to obtain motion data 3, and synchronize the motion data 3 to the device 200b.

For example, motion data synchronization may be triggered in the following manners.

### Manner 1:

When the user is of a first type, motion data synchronization is triggered when a variation of the motion data on the device 200a or the device 200b is greater than a threshold A; or when the user is of a second type, motion data synchronization is triggered when a variation of the motion data on the device 200a or the device 200b is greater than a threshold B.

A type of the user may be determined based on a user profile. For example, it is determined, based on the user profile, whether the user is a heavy user or a non-heavy user. The first type may be understood as a heavy user, and the second type may be understood as a non-heavy user.

The motion data may include a step count, calories, active hours, a distance, and the like.

Manner 2: Motion data synchronization is triggered when the device 200a and the device 200b change from a wireless disconnection state to a wireless connection state.

Manner 3: When the device 200a starts the sports and health application (Application, App), for example, Huawei Health, for a first time, or when the user performs an operation of pulling down to refresh a home page of the application, motion data synchronization is triggered.

Manner 4: periodic synchronization. For example, motion data synchronization between the device 200a and the device 200b is implemented at an interval of preset duration. The preset duration may be 1 hour (hour, h), 2 hours, or the like.

When motion data synchronization between the device 200a and the device 200b is implemented, if the device 200b needs to transmit the motion data to the device 200a, the device 200b may transmit the motion data 2 collected by the device 200b to the device 200a in a wireless manner. A device management module 210 in the device 200a may perform byte conversion on the motion data 2 and then store motion data 2 obtained through byte conversion in a data platform 220. The data platform 220 may perform motion data fusion on the motion data 1 determined by a step counting module and the motion data 2 on the device 200b, to obtain the motion data 3. After reading the motion data 3 from the data platform 220, the device management module sends the motion data 3 to the device 200b. Similarly, when the motion data 3 is different from the motion data 1, the step counting module 230 may read the motion data 3 from the data platform 220, and provide the motion data 3 for the UI for real-time refreshing. In this way, motion data synchronization between the device 200a and the device 200b is implemented.

For example, the device 200a may be a mobile phone or a tablet, and the device 200b may be a sports watch or a sports band.

In some other examples, there may be a plurality of devices 200a, and there may be a plurality of devices 200b.

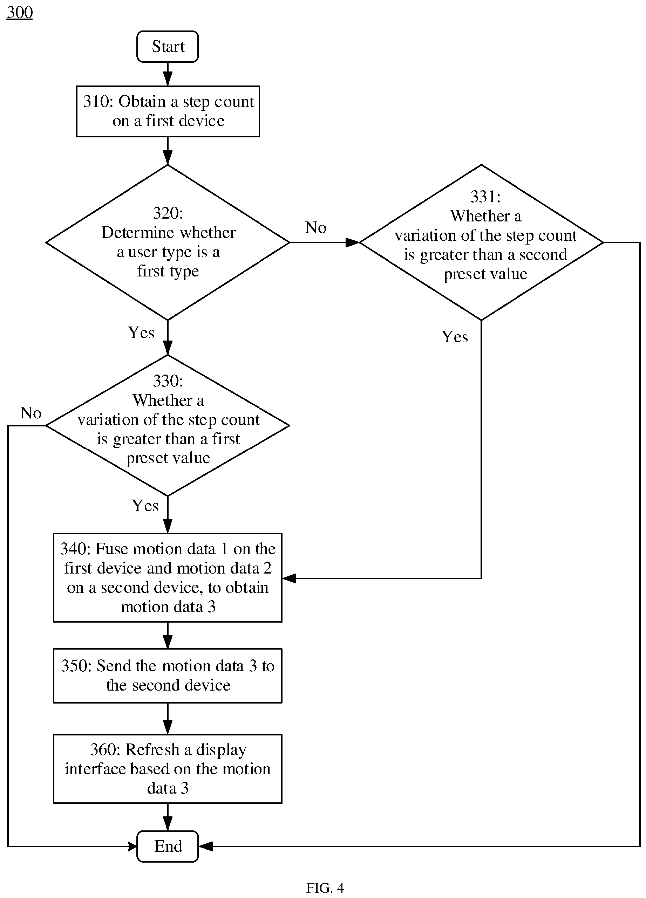

FIG. 4 is a schematic flowchart of a motion data synchronization method according to an embodiment of this application. As shown in FIG. 4, a method 300 may include step 310 to step 360. The method 300 may be applied to a first device and a second device that are in a wireless connection state. For example, the first device may be a smartphone, and the second device may be a sports watch.

310: The first device obtains a step count on the first device.

For example, the first device may include a motion sensor, and the motion sensor may obtain a step count of a user in real time.

320: The first device determines whether a user type is a first type.

For example, the user is a user corresponding to a login account on the first device. The first device may determine the user type based on a user profile, and the first type may be a heavy user.

Alternatively, the first device may determine the user type based on a frequency of logging in to a sports and health application and a frequency of tapping motion data by the user. For example, if both the frequency of logging in to the sports and health application and the frequency of tapping the motion data by the user each week are greater than a threshold, it may be determined that the user is of the first type.

330: When it is determined that the user type is the first type, the first device determines whether a variation of the step count is greater than a first preset value.

For example, the first preset value may be 200, 100, or the like. A specific value of the first preset value is not limited in this embodiment of this application.

After determining that the variation of the step count is greater than the first preset value, the first device may continue to perform step 340.

331: When it is determined that the user type is not the first type, the first device determines whether a variation of the step count is greater than a second preset value.

For example, the second preset value may be 500 or 600. A specific value of the second preset value is not limited in this embodiment of this application.

It should be understood that the first preset value needs to be less than the second preset value. In this embodiment of this application, when the user type is the first type, it means that the user often logs in to the sports and health application and pays more attention to the motion data of the user. Therefore, the first preset value may be small, so that the motion data on the two ends can be synchronized in time when the motion data of the user changes. This brings good user experience.

When determining that the variation of the step count is greater than the second preset value, the first device continues to perform step 340.

340: The first device fuses motion data 1 on the first device and motion data 2 on the second device, to obtain motion data 3.

It should be understood that, before step 340, the first device has received the motion data 2 on the second device at least once.

The first device may fuse the motion data 1 on the first device and the motion data 2 on the second device. A fusion rule is as follows:
For the first device that supports viewing of detailed motion data, the motion data may be collected by minute. If there are both motion data collected by the first device and motion data collected by the second device in a same minute, the motion data collected by the second device is used.

For example, if there are both motion data collected by the first device and motion data collected by the second device at a time point 9:01, the motion data collected by the second device is used.

If there is only data in the first device in a minute, the data in the first device is used. If there is only data in the second device in a minute, the data in the second device is used.

For the first device that supports viewing of detailed motion data, if there are a plurality of second devices, and there are both motion data collected by the first device and motion data collected by the plurality of second devices in a same minute, motion data collected by a device with a larger media access control (media access control, MAC) address in the second devices is used.

In this way, because the second device with the larger MAC address is new in the market and has more advanced motion sensor, the collected motion data is more accurate.

For the first device that supports viewing of detailed motion data, if a type of the second device is the same as that of the second device, for example, both the first device and the second device are mobile phones, and there are both motion data collected by the first device and motion data collected by the second device in a same minute, motion data collected by a device with a larger device identity document (identity document, ID) in the first device and the second device is used.

In this way, because the device with the large device ID is new in the market and has more advanced motion sensor, the collected motion data is more accurate.

For the first device that does not support viewing of detailed motion data, a largest value of a step count in the motion data collected by the first device and a step count in the motion data collected by the second device is used.

It should be understood that a data type of the motion data 3 may include detailed motion data of current preset duration, for example, a step count, calories, medium- and high-intensity activities, and active hours in 30 or 60 minutes, and may further include summary motion data on a current day, for example, a total step count, calories, medium- and high-intensity activities, active hours, a distance, and ascent data.

350: The first device sends the motion data 3 to the second device.

It should be understood that, after the first device sends, to the second device, the motion data 3 obtained by fusing the motion data 1 and the motion data 2, the second device may refresh motion data on a display interface based on the motion data 3, so that the motion data displayed by the first device and the motion data displayed by the second device are the same.

360: The first device refreshes a display interface based on the motion data 3.

The first device may refresh the display interface based on the motion data 3 obtained through fusion, so that the motion data displayed on the display interface is updated in real time.

It may be understood that, after receiving the motion data 3, the second device also needs to refresh the display interface, so that the motion data displayed by the first device and the motion data displayed by the second device are the same.

A specific execution sequence of step 310 to step 360 is not limited in this embodiment of this application. In some other examples, step 350 and step 360 may alternatively be performed synchronously.

In some other examples, after the first device determines that a variation of the calories is greater than a threshold, or after the first device determines that a variation of the distance is greater than a threshold, or when the first device determines that the active hours change, the first device may also fuse motion data, and sends motion data 3 obtained through fusion to the second device.

For example, when the variation of the calories is greater than 100 calories, or when the variation of the distance is greater than 1 kilometer, the first device may fuse the motion data, and send the motion data 3 obtained through fusion to the second device.

Based on this embodiment of this application, when detecting that the variation of the motion data is greater than the preset value, the first device may trigger motion data synchronization. In this way, the first device fuses the motion data 1 on the first device and the motion data 2 on the second device, to obtain the motion data 3, and sends the motion data 3 to the second device and refreshes the display interface, so that the motion data displayed by the first device and the motion data displayed by the second device are the same.

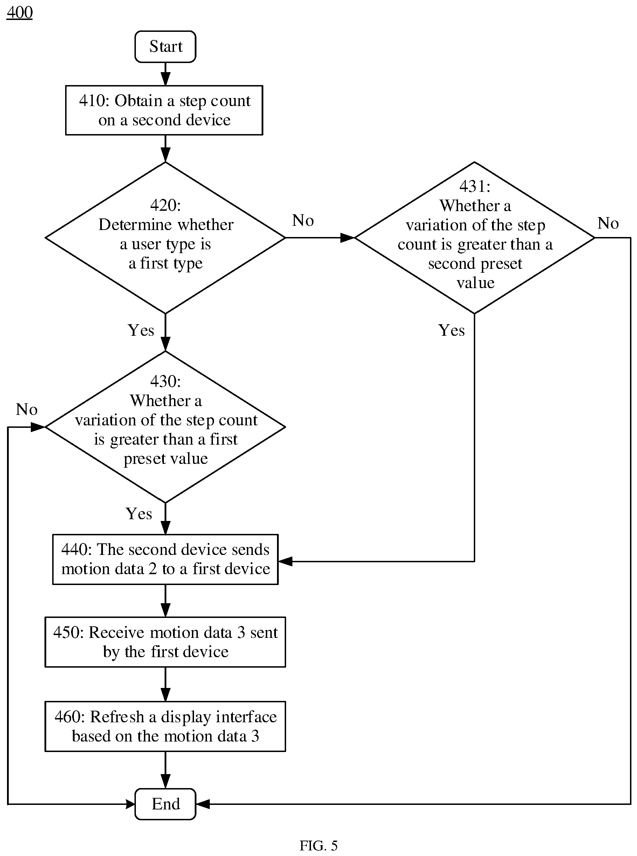

FIG. 5 is a schematic flowchart of another motion data synchronization method according to an embodiment of this application. As shown in FIG. 5, a method 400 may include step 410 to step 460. The method 400 may be applied to a second device.

410: The second device obtains a step count on the second device.

For example, the second device may include a motion sensor, and the motion sensor may obtain a step count of a user in real time.

420: The second device determines whether a user type is a first type.

It should be understood that a manner in which the second device determines whether the user type is the first type is the same as the foregoing manner in which the first device determines whether the user type is the first type. For details, refer to the foregoing descriptions. For brevity, details are not described herein again.

430: When determining that the user type is the first type, the second device determines whether a variation of the step count is greater than a first preset value.

When determining that the variation of the step count is greater than the first preset value, the second device may perform step 440.

431: When determining that the user type is not the first type, the second device determines whether a variation of the step count is greater than a second preset value.

For the first preset value and the second preset value, refer to the foregoing descriptions.

When determining that the variation of the step count is greater than the second preset value, the second device may perform step 440.

440: The second device sends motion data 2 to a first device.

For example, the second device may send the motion data 2 to the first device through Bluetooth or Wi-Fi. After receiving the motion data 2, the first device may fuse motion data 1 and the motion data 2 according to a fusion rule, to obtain motion data 3. Then, the first device may send the motion data 3 to the second device. For the fusion rule, refer to the foregoing descriptions.

450: The second device receives the motion data 3 sent by the first device.

It should be understood that the motion data 3 is obtained by fusing the motion data 1 on the first device and the motion data 2 on the second device.

After the first device fuses the motion data 1 and the motion data 2, to obtain the motion data 3, the first device may generate a daily statistical value, and refresh a medal of today's achievement. For example, when the motion data 3 is greater than or equal to target motion data, an achievement in which today's target is completed may be achieved.

A data type of the motion data 3 may include detailed motion data of current preset duration, for example, a step count, calories, medium- and high-intensity activities, and active hours in 30 or 60 minutes, and may further include summary motion data on a current day, for example, a total step count, calories, medium- and high-intensity activities, active hours, a distance, and ascent data. This helps the second device collect statistics on data within the preset duration and collect statistics on total data after data fusion, and draw a bar chart for reference by the user.

460: The second device refreshes a display interface based on the motion data 3.

After receiving the motion data 3, the second device may refresh the display interface based on the motion data 3, so that the motion data displayed by the second device is updated in real time.

It may be understood that the first device may also refresh a display interface based on the motion data 3 obtained through fusion, so that the motion data displayed by the first device and the motion data displayed by the second device are the same.

In some other examples, after the second device determines that a variation of the calories is greater than a threshold, or after the second device determines that the distance is greater than a threshold, or when the second device determines that the active hours change, the second device may also send the motion data 2 to the first device, and the first device fuses the motion data, and sends the motion data 3 obtained through fusion to the second device.

Based on this embodiment of this application, when determining that the detected variation of the motion data is greater than the preset value, the second device may trigger motion data synchronization, and send the motion data 2 to the first device, so that the first device fuses the motion data 1 on the first device and the motion data 2 on the second device, to obtain the motion data 3. Then, the first device may send the motion data 3 to the second device, so that the motion data displayed by the first device and the motion data displayed by the second device are the same.

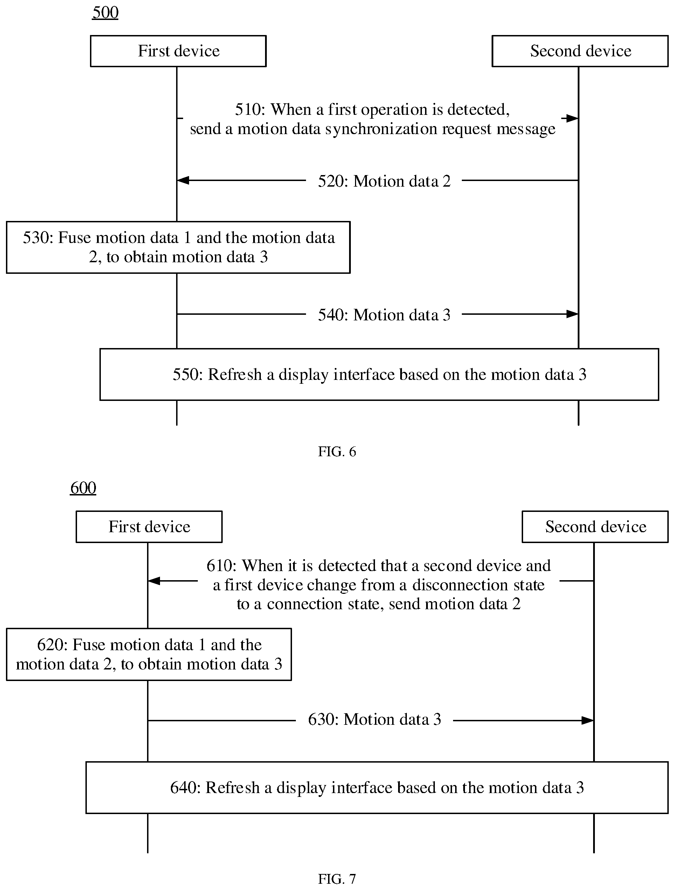

The foregoing describes, with reference to FIG. 4 and FIG. 5, the technical solution of triggering motion data synchronization when the first device or the second device detects that the variation of the motion data is greater than the threshold. The following describes technical solutions of triggering motion data synchronization in other scenarios with reference to FIG. 6 and FIG. 7.

FIG. 6 is an interaction diagram of another motion data synchronization method according to an embodiment of this application. As shown in FIG. 6, a method 500 may include step 510 to step 550.

510: When detecting a first operation, a first device sends a motion data synchronization request message to a second device. Correspondingly, the second device receives the motion data synchronization request message.

For example, the first operation may be an operation of starting a home page of a sports and health on the first device by a user, or the first operation may be an operation of pulling down to refresh a home page of a sports and health by a user.

520: The second device sends motion data 2 to the first device based on the motion data synchronization request message.

After receiving the motion data synchronization request message, the second device may send the collected motion data 2 to the first device.

530: The first device fuses motion data 1 and the motion data 2, to obtain motion data 3.

It should be understood that, for a specific manner in which the first device fuses the motion data 1 and the motion data 2, refer to the foregoing descriptions.

540: The first device sends the motion data 3 to the second device.

For example, the motion data 3 may include detailed motion data of preset duration (for example, 30 minutes or 60 minutes) on a current day and a previous day and summary motion data on last seven days. For example, when the preset duration is 30 minutes, the motion data 3 may include a total of 48 pieces of 30-minute-level detailed motion data of a current day and a previous day, and daily summary motion data of last seven days.

It may be understood that, when the sports and health application is run in a foreground, a time interval at which the first device sends the motion data 3 to the second device twice is not less than one second or two seconds. If an interval between two times of triggering synchronization is less than one second or two seconds, the first device may only perform fusion and does not send the data to the second device, and sends the data to the second device when synchronization is performed next time. Alternatively, when the first device performs data fusion, a calories difference between current motion data and previous motion data needs to be greater than 1,000 or 500 calories.

When the sports and health application is run in a background, a time interval at which the first device sends the motion data 3 to the second device twice is not less than one minute or two minutes. If an interval between two times of triggering synchronization is less than one minute or two minutes, the first device may only perform fusion and does not send the motion data 3 to the second device, and sends the data to the second device when synchronization is performed next time. In this way, the first device can be prevented from frequently sending the motion data to the second device, so that power consumption of an electronic device can be reduced.

550: The first device and the second device refresh display interfaces based on the motion data 3.

It may be understood that the first device and the second device may separately refresh respective display interfaces based on the motion data 3, so that the motion data displayed by the first device and the motion data displayed by the second device are the same.

A specific execution sequence of step 510 to step 550 is not limited in this embodiment of this application. In some other examples, after obtaining the motion data 3, the first device may refresh the display interface of the first device while sending the motion data 3 to the second device.

Based on this embodiment of this application, when the user performs the first operation on the first device, motion data synchronization may be triggered. After receiving the motion data 2 from the second device, the first device may perform data fusion on the motion data 1 and the motion data 2, to obtain the motion data 3, and send the motion data 3 to the second device. The first device and the second device separately refresh respective display interfaces, so that the motion data displayed by the first device and the motion data displayed by the second device are the same.

FIG. 7 is an interaction diagram of another motion data synchronization method according to an embodiment of this application. As shown in FIG. 7, a method 600 may include step 610 to step 640.

610: When detecting that a second device and a first device change from a wireless disconnection state to a wireless connection state, the second device sends motion data 2 to the first device.

For example, when the first device is not connected to the second device, the first device and the second device may separately collect motion data of a user. When the second device detects that the first device is in a wireless connection state, the second device may send the motion data 2 collected by the second device to the first device in a wireless manner.

620: The first device fuses motion data 1 and the motion data 2, to obtain motion data 3.

It should be understood that, for a manner in which the first device fuses the motion data 1 and the motion data 2, refer to the foregoing descriptions. For brevity, details are not described herein again.

630: The first device sends the motion data 3 to the second device.

For example, the motion data 3 may include detailed motion data of preset duration (for example, 30 minutes or 60 minutes) on a current day and a previous day and summary motion data on last seven days. For example, when the preset duration is 30 minutes, the motion data 3 may include a total of 48 pieces of 30-minute-level detailed motion data of a current day and a previous day, and daily summary motion data of last seven days.

It may be understood that a time interval at which the first device sends the motion data 3 to the second device twice may be less than preset duration. For example, the preset duration may be 30 minutes. This can avoid frequently triggering motion data synchronization between the first device and the second device when the first device and the second device are repeatedly disconnected and reconnected due to a distance relationship.

640: The first device and the second device refresh display interfaces based on the motion data 3.

It may be understood that the first device and the second device may separately refresh respective display interfaces based on the motion data 3, so that the motion data displayed by the first device and the motion data displayed by the second device are the same.

A specific execution sequence of step 610 to step 640 is not limited in this embodiment of this application. In some other examples, after obtaining the motion data 3, the first device may refresh the display interface of the first device while sending the motion data 3 to the second device.

Based on this embodiment of this application, when detecting that the second device changes from being disconnected from the first device to being connected to the first device, the second device may trigger motion data synchronization. After receiving the motion data 2 from the second device, the first device may perform data fusion on the motion data 1 and the motion data 2, to obtain the motion data 3, and send the motion data 3 to the second device. The first device and the second device separately refresh respective display interfaces, so that the motion data displayed by the first device and the motion data displayed by the second device are the same.

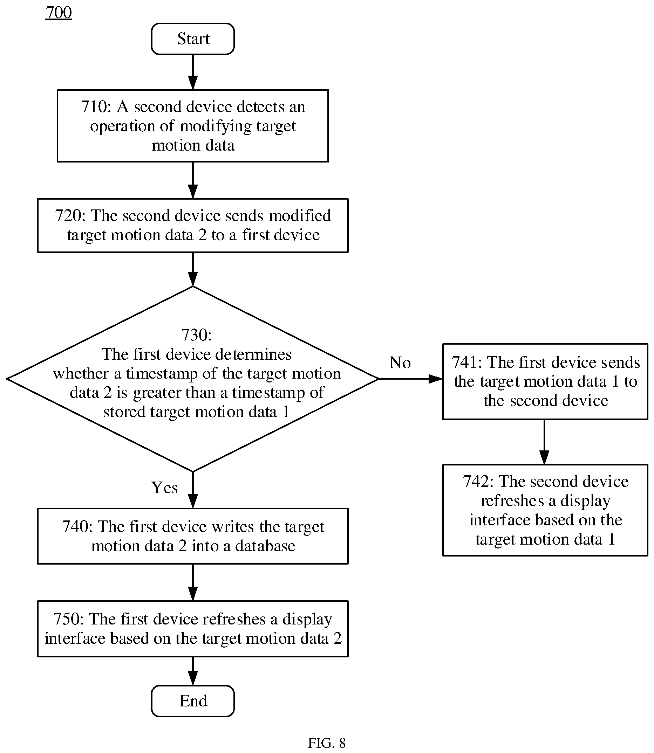

In some cases, the user may modify target motion data in the first device or the second device. For example, the user may set or modify a daily target step count, target exercise duration, and target active hours. The following describes the technical solution with reference to FIG. 8 to FIG. 10.

FIG. 8 is a schematic flowchart of a target motion data synchronization method according to an embodiment of this application. As shown in FIG. 8, a method 700 may include step 710 to step 750.

710: A second device detects an operation of modifying target motion data.

For example, a user modifies the target motion data in the second device. For example, the user modifies a target step count from 5,000 steps to 10,000 steps on the second device.

Alternatively, the user may modify a plurality of pieces of target motion data in the second device. For example, the user may modify the target step count from 5,000 steps to 10,000 steps, modify exercise duration from 20 minutes to 30 minutes, and modify active hours from 10 hours to 12 hours.

720: The second device sends modified target motion data 2 to a first device. Correspondingly, the first device receives the target motion data 2.

For example, on the second device, the target motion data modified by the user is the target motion data 2, and the second device may send the modified target motion data 2 to the first device.

730: The first device determines whether a timestamp of the target motion data 2 is greater than a timestamp of stored target motion data 1.

It should be understood that the first device stores the target motion data 1. When receiving the target motion data 2 sent by the second device, the first device may compare the timestamp of the target motion data 2 with the timestamp of the stored target motion data 1.

740: When determining that the timestamp of the target motion data 2 is greater than or equal to the timestamp of the stored target motion data 1, the first device writes the target motion data 2 into a database as final target motion data.

It should be understood that, when the timestamp of the target motion data 2 is greater than the timestamp of the target motion data 1, it indicates that the target motion data 2 is last modified, and the first device may use the target motion data 2 as final target motion data of a current day.

741: When determining that the timestamp of the target motion data 2 is less than the timestamp of the stored target motion data 1, the first device sends the target motion data 1 to the second device.

742: The second device refreshes a display interface based on the target motion data 1.

After receiving the target motion data 1 sent by the first device, the second device may refresh the display interface of the second device based on the target motion data 1, so that when the user views the target motion data, a value displayed on the second device side and a value displayed on the first device side are the same.

750: The first device refreshes a display interface based on the target motion data 2.

The first device may refresh the display interface of the first device based on latest target motion data 2, so that the displayed target data is updated in real time.

In this way, after the user modifies the target motion data in the second device, it can be ensured that the target motion data in the first device and the target motion data in the second device are consistent, and the target motion data that is last modified on the current day is used, so that real-time performance of the target data can be ensured.

In some examples, after the user modifies the target motion data of the current day, if the motion data of the current day has reached a specified target value, a medal of achievement may be delivered to the user.

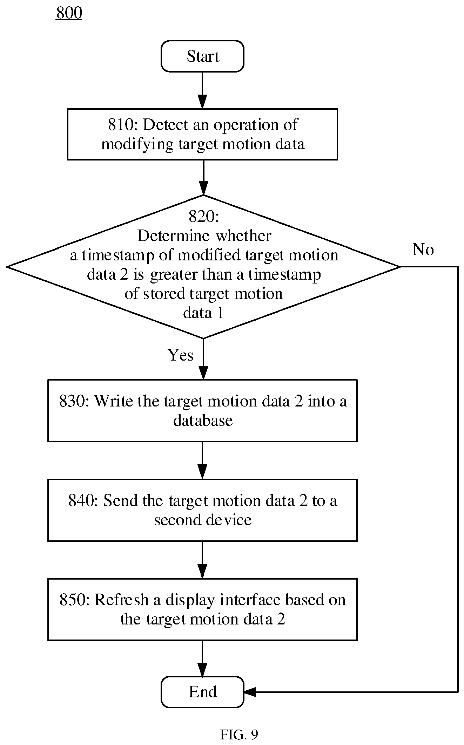

The following describes, with reference to FIG. 9, an operation of modifying target motion data by a user on a first device.

FIG. 9 is a schematic flowchart of another target motion data synchronization method according to an embodiment of this application. As shown in FIG. 9, a method 800 may include step 810 to step 850.

810: A first device detects an operation of modifying target motion data.

For example, a user modifies the target motion data in the first device. For example, the user modifies a target step count from 5,000 steps to 10,000 steps on the first device.

Alternatively, the user may modify a plurality of pieces of target motion data in the first device. For example, the user may modify the target step count from 5,000 steps to 10,000 steps, modify exercise duration from 20 minutes to 30 minutes, and modify active hours from 10 hours to 12 hours.

820: The first device determines whether a timestamp of modified target motion data 2 is greater than a timestamp of stored target motion data 1.

It should be understood that the first device stores the target motion data 1. When the first device detects that the user modifies the target motion data, the modified target motion data may be the target motion data 2. In this case, the first device may compare the timestamp of the target motion data 2 with the timestamp of the stored target motion data 1.

830: When determining that the timestamp of the target motion data 2 is greater than the timestamp of the target motion data 1, the first device writes the target motion data 2 into a database as final target motion data.

It should be understood that, when the timestamp of the target motion data 2 is greater than the timestamp of the target motion data 1, it indicates that the target motion data 2 is last modified, and the first device may use the target motion data 2 as final target motion data of a current day.

840: The first device sends the target motion data 2 to the second device.

The first device sends the target motion data 2 to the second device, so that the target motion data displayed on the first device and the target motion data displayed on the second device are consistent.

It should be understood that after receiving the target motion data 2, the second device may refresh a display interface based on the target motion data 2.

850: The first device refreshes a display interface based on the target motion data 2.

The first device may refresh the display interface based on latest target motion data 2, so that the target motion data displayed in the display interface is the latest.

In this way, the target motion data displayed by the first device and the target motion data displayed by the second device are the same.

Based on this embodiment of this application, after the user modifies the target motion data in the first device, it can be ensured that the target motion data in the first device and the target motion data in the second device are consistent, and the target motion data that is last modified on the current day is used, so that real-time performance of the target data can be ensured.

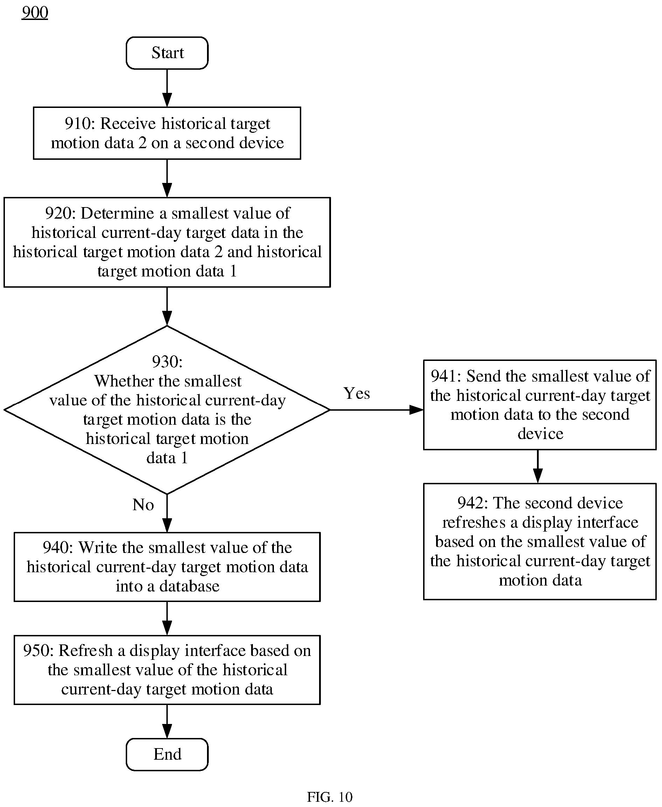

FIG. 10 is a schematic flowchart of another historical target data synchronization method according to an embodiment of this application. As shown in FIG. 10, a method 900 may include step 910 to step 950.

910: A first electronic device receives historical target motion data 2 in a second device.

The historical target motion data 2 may be understood as target motion data whose timestamp is before today. For example, the target motion data may be target motion data whose timestamp is yesterday and before yesterday in the second device.

920: The first device determines a smallest value of historical current-day target data in the historical target motion data 2 and the historical target motion data 1.

For example, the historical target motion data 2 may include target motion data of seven days before today (excluding today). In this case, in the target motion data of the seven days, each day may correspond to one piece of target motion data, and the target motion data of the seven days may be the same or different. Similarly, the first device may compare the target motion data of the seven days with daily target motion data that is in the historical target motion data 1 and that corresponds to the target motion data of the seven days, and determine daily smallest target data.

For example, for May 23, 2023, if a target step count in the historical target motion data 2 in the second device is 5,000 steps, and a target step count in the historical target motion data 1 stored in the first device is 6,000 steps, the target motion data on May 23, 2023 is 5,000 steps.

In this way, fusion of the historical target motion data by the first device does not affect a medal of achievement for a target that has been achieved in historical data of a user.

930: The first device determines whether the smallest value of the historical current-day target motion data is the historical target motion data 1.

940: When determining that the smallest value of the historical current-day target motion data is not the historical target motion data 1, the first device writes the smallest value of the historical current-day target motion data into a database on the first device, and uses the smallest value as final historical current-day target motion data.

When the first device determines that the smallest value of the historical current-day target motion data is not the historical target motion data 1, it indicates that the smallest value of the historical current-day target motion data is from the second device. In this case, the first device may write the smallest value into the database on the first device, to update the historical current-day target motion data, so that the historical target motion data in the first device and the historical target motion data in the second device are consistent.

941: When the first device determines that the smallest value of the historical current-day target motion data is the historical target motion data 1, the first device sends the smallest value of the historical current-day target motion data to the second device.

When the first device determines that the smallest value of the historical current-day target motion data is the historical target motion data 1, it indicates that the smallest value of the historical current-day target motion data is data stored in the first device. In this case, the first device may send the smallest value to the second device. In this way, the historical target motion data in the first device and the historical target motion data in the second device are consistent.

942: The second device refreshes a display interface based on the smallest value of the historical current-day target motion data.

It should be understood that, when receiving the smallest value of the historical current-day target motion data sent by the first device, the second device may refresh the display interface. In this way, when the user views the historical data, target motion data displayed on display interfaces is the same.

950: The first device refreshes a display interface based on the smallest value of the historical current-day target motion data.

In this way, the historical target motion data displayed by the first device and the historical target motion data displayed by the second device are consistent, and medals of daily achievements reached by the user can be consistent.

It should be understood that the foregoing embodiments may be combined with each other or partially combined with each other to form a new embodiment. It should not be considered that this technical solution goes beyond the protection scope of this application.

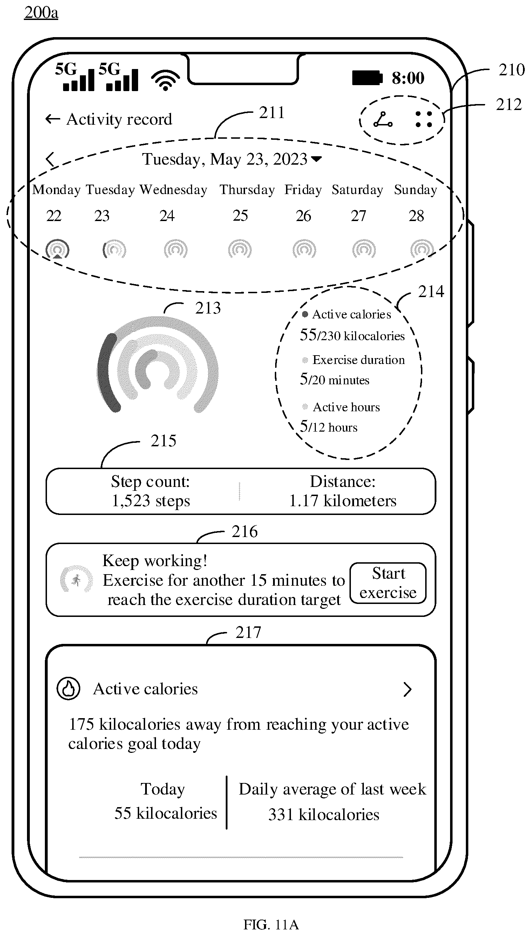

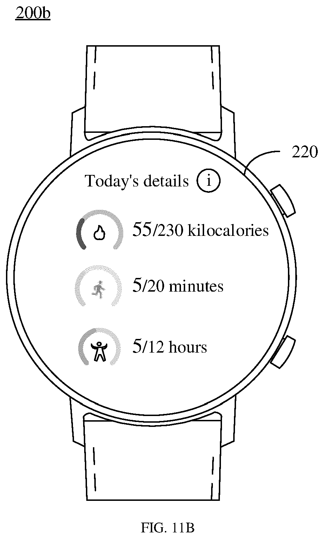

FIG. 11A and FIG. 11B are diagrams of display interfaces obtained by synchronizing motion data in a first device with motion data in a second device. As shown in FIG. 11A and FIG. 11B, a device 200a may include a display interface 210, and the display interface 210 may be a display interface of an activity record of a sports and health application.

The display interface 210 may include a date display and activity rings achievement bar 211, a function button bar 212, activity rings 213, today's motion data and target motion data 214, a today's step count and distance display card 215, a motion reminder display card 216, and a calories display card 217.

The today's motion data and target motion data 214 may include today's data and target data "55/230 kilocalories" of calories of a user, today's data and target data "5/20 minutes" of exercise duration, and today's data and target data "5/12 hours" of active hours.

Refer to FIG. 11A and FIG. 11B. A device 200b may include a display interface 220. The display interface 220 may include today's motion data and target motion data.

The today's motion data and target motion data includes today's data and target data "55/230 kilocalories" of calories of a user, today's data and target data "5/20 minutes" of exercise duration, and today's data and target data "5/12 hours" of active hours.

It can be learned from the foregoing descriptions that, by using the foregoing technical solutions in this application, after motion data synchronization between the device 200a and the device 200b is implemented, the motion data and toady's target motion data on the display interface of the device 200a and the motion data and toady's target motion data on the display interface of the device 200b are consistent.

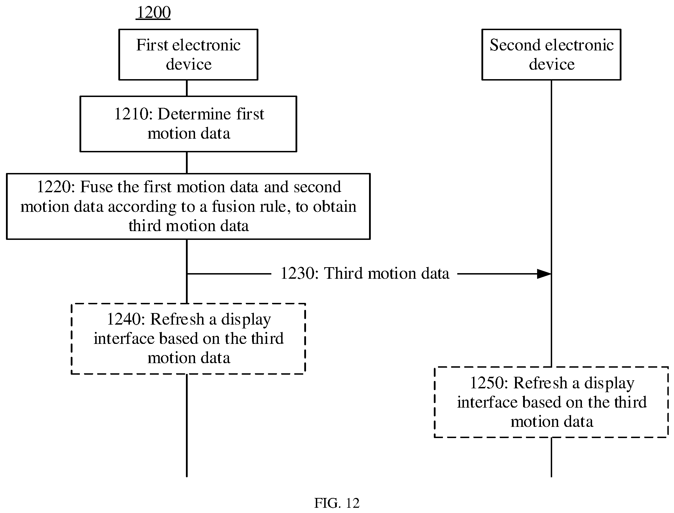

FIG. 12 is a schematic flowchart of a motion data synchronization method according to an embodiment of this application. As shown in FIG. 12, a method 1200 may include step 1210 to step 1230.

1210: A first electronic device determines first motion data.

For example, the first motion data may include a step count, calories, a distance, active hours, ascent data, medium- and high-intensity activities, and a heart rate.

1220: When a first preset condition is met, the first electronic device fuses the first motion data and second motion data according to a fusion rule, to obtain third motion data, where the second motion data is motion data determined by a second electronic device.

The first preset condition may be that a variation of the first motion data is greater than a preset value, or the first preset condition may be that the second motion data sent by the second electronic device is received, or the first preset condition may be that an operation of starting a home page of a target application by a user or an operation of pulling down to refresh a home page of a target application by a user is detected.

The fusion rule may be: for an electronic device that supports viewing of detailed motion data, for motion data in a same minute, if there are both the motion data in the first electronic device and the motion data in the second electronic device, the motion data in the second electronic device is used, or if there is only data in one electronic device, the motion data in the electronic device is used. For an electronic device that does not support viewing of detailed motion data, larger data is used as the third motion data.

The second motion data and the third motion data may also include a step count, calories, a distance, active hours, ascent data, medium- and high-intensity activities, and a heart rate.

For example, the first electronic device may be the foregoing first device, and the second electronic device may be the foregoing second device.

1230: The first electronic device sends the third motion data to the second electronic device.

In some examples, the method 1200 may further include step 1240 and step 1250.

1240: The first electronic device refreshes a display interface based on the third motion data.

1250: The second electronic device refreshes a display interface based on the third motion data.

In this way, the motion data in the first electronic device and the motion data in the second electronic device may be consistent, so that the user may view the same motion data in the first electronic device and the second electronic device, thereby helping improve user experience.

In some embodiments, that the first electronic device fuses the first motion data and second motion data according to a fusion rule, to obtain third motion data includes: if the first electronic device supports viewing of detailed motion data, and there are both the first motion data and the second motion data in a target minute, using data corresponding to the target minute in the second motion data as data in the target minute in the third motion data; if there is only the first motion data or the second motion data in a target minute, using data corresponding to the target minute in the first motion data or the second motion data as data in the target minute in the third motion data; or if the first electronic device does not support viewing of detailed motion data, using a larger one of the first motion data and the second motion data as the third motion data.

For example, the target minute herein may be a specific minute. For example, the target minute may be 9:01.

In this embodiment of this application, for an electronic device that supports viewing of detailed motion data, for motion data in a same minute, if there are both the motion data in the first electronic device and the motion data in the second electronic device, the motion data in the second electronic device is used, or if there is only data in one electronic device, the motion data in the electronic device is used. For an electronic device that does not support viewing of detailed motion data, larger data is used as the third motion data. In this technical solution, the first electronic device may use different motion data fusion manners for different cases, so that fused data may be more accurate, and may better reflect an actual motion status of the user.

In some embodiments, if the second motion data includes motion data of a plurality of second electronic devices, that the first electronic device fuses the first motion data and second motion data according to a fusion rule, to obtain third motion data includes: if there are both the first motion data and the second motion data in a target minute, using motion data of a second electronic device with a largest medium access control MAC address as data in the target minute in the third motion data.

In this embodiment of this application, if there is the motion data of the plurality of second electronic devices, when the first electronic device performs data fusion, in a same minute, the motion data in the second electronic device with the largest MAC address is used.

Because an MAC address of a newly produced electronic device is large, a motion sensor used by the newly produced electronic device may also be advanced, so that motion data obtained by the first electronic device during motion data fusion may be more accurate.

In some embodiments, the first preset condition is that the first electronic device determines that a variation of the first motion data is greater than a preset value, and before the first electronic device fuses the first motion data and the second motion data according to the fusion rule, the method 1200 further includes:
determining a user type based on a user profile; and
when it is determined that the user type is a first type, determining that the preset value is a first preset value; or
when it is determined that the user type is not a first type, determining that the preset value is a second preset value, where the first preset value is less than the second preset value.

For example, the first type may be the foregoing heavy user. For example, the first motion data includes a step count, the first preset value may be 200, 100, or the like, and the second preset value may be 500, 600, or the like.

In this embodiment of this application, different user types may correspond to different preset values, so that a variation of the motion data may be dynamically adjusted, thereby improving flexibility of motion data synchronization.

In some embodiments, the first preset condition is that the first electronic device detects an operation of starting a home page of a target application by a user or an operation of pulling down to refresh a home page of a target application by a user, before the first electronic device fuses the first motion data and second motion data according to a fusion rule, the method 1200 may further include:
sending a motion data synchronization request to the second electronic device; and
receiving the second motion data sent by the second electronic device.

In this embodiment of this application, when the user performs the operation of starting the home page of the target application or pulls down to refresh the home page of the target application, motion data synchronization may be triggered, so that the motion data presented by the first electronic device to the user may be more accurate.

In some embodiments, the third motion data includes detailed motion data within preset duration and summary motion data on a current day.

For example, the preset duration may be 30 minutes or 60 minutes.

In this embodiment of this application, the third motion data may include data of a plurality of data types, so that the motion data may be presented to the user from a plurality of perspectives.

In some embodiments, the third motion data includes detailed motion data within each preset duration of a first preset quantity of days and summary motion data of each day of a second preset quantity of days.

For example, the first preset day may be two days, for example, today and yesterday, and the second preset day may be seven days or five days.

In this embodiment of this application, the third motion data may include data of a plurality of data types, so that the motion data may be presented to the user from a plurality of perspectives.

In some embodiments, the method 1200 may further include:
in response to an operation of modifying target motion data, determining whether a timestamp of modified second target motion data is greater than a timestamp of stored first target motion data;
if it is determined that the timestamp of the second target motion data is greater than the timestamp of the first target motion data, sending the second target motion data to the second electronic device; and
refreshing the display interface of the first electronic device based on the second target motion data.

For example, the user modifies a target step count from 5,000 steps to 6,000 steps.

Based on this embodiment of this application, when the user modifies the target motion data in the first electronic device, the modified target motion data may be automatically synchronized to the second electronic device, so that the target motion data displayed on the plurality of electronic devices of the user is consistent.

In some embodiments, the method 1200 may further include:
receiving second target motion data sent by the second electronic device; and
if it is determined that a timestamp of the second target motion data is less than or equal to a timestamp of stored first target motion data, sending the first target motion data to the second electronic device; or
if it is determined that a timestamp of the second target motion data is greater than a timestamp of the first target motion data, refreshing the display interface of the first electronic device based on the second target motion data.

The second target motion data may be target motion data obtained by the user through modification on the second electronic device. For example, the target step count is 6,000. The first target motion data may be stored in the first electronic device. For example, the target step count is 5,000.

Based on this embodiment of this application, when the user modifies the target motion data in the second electronic device, the modified target motion data may be automatically synchronized to the first electronic device, so that the target motion data displayed on the plurality of electronic devices of the user is consistent.

In some embodiments, the first electronic device stores first historical target motion data, and the method 1200 may further include:
receiving second historical target motion data sent by the second electronic device;
determining whether smallest target motion data on each historical day in the first historical target motion data and the second historical target motion data is the first historical target motion data; and
if it is determined that the smallest target motion data is the first historical target motion data, sending the smallest target motion data to the second electronic device; or
if it is determined that the smallest target motion data is not the first historical target motion data, refreshing the display interface of the first electronic device based on the smallest target motion data.

For example, the first historical target motion data may be the foregoing historical target motion data 1, and the second historical target motion data may be the foregoing historical target motion data 2.

Based on this embodiment of this application, historical target data in the first electronic device and historical target data in the second electronic device may be consistent. In addition, medals of daily achievements reached by the user can be consistent.

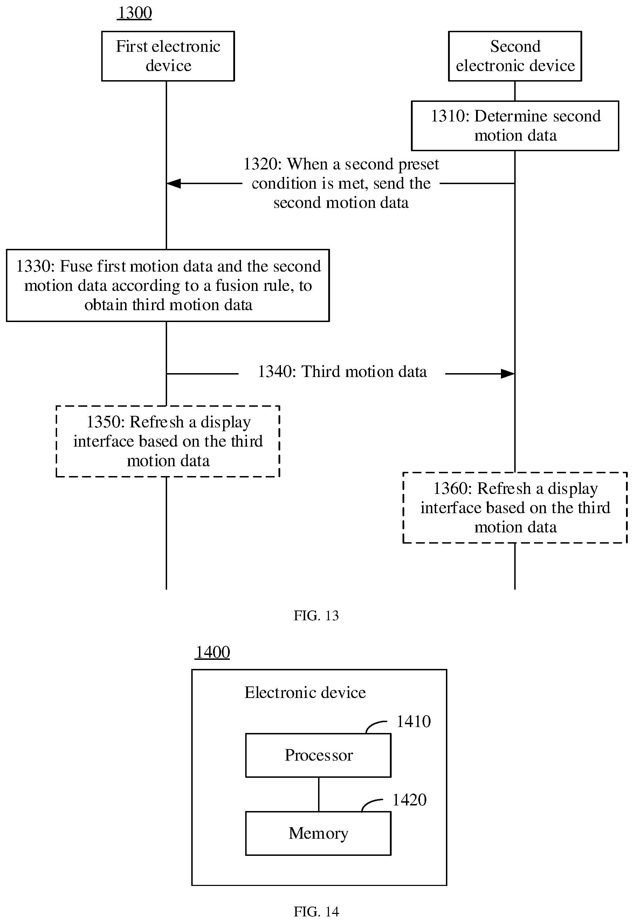

FIG. 13 is a schematic flowchart of another motion data synchronization method according to an embodiment of this application. As shown in FIG. 13, a method 1300 may include step 1310 to step 1340.

1310: A second electronic device determines second motion data.

1320: When a second preset condition is met, the second electronic device sends the second motion data to a first electronic device.

For example, the second preset condition may be that the second electronic device determines that a variation of the second motion data is greater than a preset value, or the second preset condition may be that the second electronic device detects that the second device changes from being disconnected from the first device to being connected to the first device, or the second preset condition is that the second electronic device receives a motion data synchronization request sent by the first electronic device.

1330: The first electronic device fuses first motion data and the second motion data according to a fusion rule, to obtain third motion data.

For example, for the fusion rule, refer to the foregoing related descriptions.

1340: The first electronic device sends the third motion data to the second electronic device.

In some other examples, the method 1300 may further include step 1350 and step 1360.

1350: The first electronic device refreshes a display interface based on the third motion data.

1360: The second electronic device refreshes a display interface based on the third motion data.

In this way, the motion data in the first electronic device and the motion data in the second electronic device may be consistent, so that the user may view the same motion data in the first electronic device and the second electronic device, thereby helping improve user experience.

In some embodiments, the second preset condition is that the second electronic device determines that a variation of the second motion data is greater than a preset value, and before the sending the second motion data to a first electronic device, the method 1300 further includes:
determining a user type based on a user profile; and
when it is determined that the user type is a first type, determining that the preset value is a first preset value; or
when it is determined that the user type is not a first type, determining that the preset value is a second preset value, where the first preset value is less than the second preset value.

In this embodiment of this application, different user types may correspond to different preset values, so that a variation of the motion data may be dynamically adjusted, thereby improving flexibility of motion data synchronization.

In some embodiments, the method 1300 may further include:
receiving target motion data sent by the first electronic device; and
refreshing the display interface of the second electronic device based on the target motion data.

For example, the target motion data may be the foregoing target motion data 1.

In this technical solution, target motion data displayed on the first electronic device and target motion data displayed on the second electronic device may be consistent.

In some embodiments, the method 1300 may further include:
receiving historical target motion data sent by the first electronic device; and
refreshing the display interface of the second electronic device based on the historical target motion data.

For example, the historical target motion data may be the foregoing historical target motion data 1.

Based on this embodiment of this application, historical target data in the first electronic device and historical target data in the second electronic device may be consistent.

FIG. 14 is a block diagram of an electronic device according to an embodiment of this application. As shown in FIG. 14, the electronic device 1400 may include one or more processors 1410 and one or more memories 1420. The one or more memories 1420 store one or more computer programs. The one or more computer programs include instructions. When the instructions are executed by the one or more processors 1410, the motion data synchronization method according to any one of the foregoing possible implementations is performed.

For example, the electronic device 1000 may be the foregoing first device or second device.

An embodiment of this application further provides a chip. The chip includes a processor and a communication interface. The communication interface is configured to receive a signal, and transmit the signal to the processor. The processor processes the signal, so that the motion data synchronization method according to any one of the foregoing possible implementations is performed.

An embodiment further provides a computer-readable storage medium. The computer-readable storage medium stores computer instructions. When the computer instructions are run on an electronic device, the electronic device is enabled to perform the foregoing related method steps, to implement the motion data synchronization method in the foregoing embodiments.

An embodiment further provides a computer program product. When the computer program product is run on a computer, the computer is enabled to perform the foregoing related steps, to implement the motion data synchronization method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the motion data synchronization method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motion data synchronization method, wherein the method is applied to a first electronic device, and the method comprises:
determining first motion data;
when a first preset condition is met, fusing, by the first electronic device, the first motion data and second motion data according to a fusion rule, to obtain third motion data, wherein the second motion data is motion data determined by a second electronic device; and
sending the third motion data to the second electronic device.

2. The method according to claim 1, wherein the fusing, by the first electronic device, the first motion data and second motion data according to a fusion rule, to obtain third motion data comprises:
if the first electronic device supports viewing of detailed motion data, and there are both the first motion data and the second motion data in a target minute, using data corresponding to the target minute in the second motion data as data in the target minute in the third motion data;
if there is only the first motion data or the second motion data in a target minute, using data corresponding to the target minute in the first motion data or the second motion data as data in the target minute in the third motion data; or
if the first electronic device does not support viewing of detailed motion data, using a larger one of the first motion data and the second motion data as the third motion data.

3. The method according to claim 1, wherein if the second motion data comprises motion data of a plurality of second electronic devices, the fusing, by the first electronic device, the first motion data and second motion data according to a fusion rule, to obtain third motion data comprises:
if there are both the first motion data and the second motion data in a target minute, using motion data of a second electronic device with a largest medium access control MAC address as data in the target minute in the third motion data.

4. The method according to any one of claims 1 to 3, wherein the first preset condition is that the first electronic device determines that a variation of the first motion data is greater than a preset value, and before the fusing, by the first electronic device, the first motion data and second motion data according to a fusion rule, the method further comprises:
determining a user type based on a user profile; and
when it is determined that the user type is a first type, determining that the preset value is a first preset value; or
when it is determined that the user type is not a first type, determining that the preset value is a second preset value, wherein the first preset value is less than the second preset value.

5. The method according to any one of claims 1 to 3, wherein the first preset condition is that the first electronic device receives the second motion data sent by the second electronic device.

6. The method according to any one of claims 1 to 3, wherein the first preset condition is that the first electronic device detects an operation of starting a home page of a target application by a user or an operation of pulling down to refresh a home page of a target application by a user, and before the fusing, by the first electronic device, the first motion data and second motion data according to a fusion rule, the method further comprises:
sending a motion data synchronization request to the second electronic device; and
receiving the second motion data sent by the second electronic device.

7. The method according to any one of claims 1 to 5, wherein the third motion data comprises detailed motion data within preset duration and summary motion data on a current day.

8. The method according to claim 6, wherein the third motion data comprises detailed motion data within each preset duration of a first preset quantity of days and summary motion data of each day of a second preset quantity of days.

9. The method according to any one of claims 1 to 8, wherein the method further comprises:
refreshing a display interface of the first electronic device based on the third motion data.

10. The method according to any one of claims 1 to 9, wherein the method further comprises:
in response to an operation of modifying target motion data, determining whether a timestamp of modified second target motion data is greater than a timestamp of stored first target motion data;
if it is determined that the timestamp of the second target motion data is greater than the timestamp of the first target motion data, sending the second target motion data to the second electronic device; and
refreshing the display interface of the first electronic device based on the second target motion data.

11. The method according to any one of claims 1 to 9, wherein the method further comprises:
receiving second target motion data sent by the second electronic device; and
if it is determined that a timestamp of the second target motion data is less than or equal to a timestamp of stored first target motion data, sending the first target motion data to the second electronic device; or
if it is determined that a timestamp of the second target motion data is greater than a timestamp of the first target motion data, refreshing the display interface of the first electronic device based on the second target motion data.

12. The method according to any one of claims 1 to 11, wherein the first electronic device stores first historical target motion data, and the method further comprises:
receiving second historical target motion data sent by the second electronic device;
determining whether smallest target motion data of each historical day in the first historical target motion data and the second historical target motion data is the first historical target motion data; and
if it is determined that the smallest target motion data is the first historical target motion data, sending the smallest target motion data to the second electronic device; or
if it is determined that the smallest target motion data is not the first historical target motion data, refreshing the display interface of the first electronic device based on the smallest target motion data.

13. A motion data synchronization method, wherein the method is applied to a second electronic device, and the method comprises:
determining second motion data;
when a second preset condition is met, sending the second motion data to a first electronic device; and
receiving third motion data sent by the first electronic device, wherein the third motion data is motion data obtained by the first electronic device by fusing first motion data and the second motion data according to a fusion rule.

14. The method according to claim 13, wherein the second preset condition is that the second electronic device determines that a variation of the second motion data is greater than a preset value, and before the sending the second motion data to a first electronic device, the method further comprises:
determining a user type based on a user profile; and
when it is determined that the user type is a first type, determining that the preset value is a first preset value; or
when it is determined that the user type is not a first type, determining that the preset value is a second preset value, wherein the first preset value is less than the second preset value.

15. The method according to claim 13, wherein the second preset condition is that the second electronic device detects that the second electronic device and the first electronic device change from a wireless disconnection state to a wireless connection state; or the second preset condition is that the second electronic device receives a motion data synchronization request sent by the first electronic device.

16. The method according to any one of claims 13 to 15, wherein the method further comprises:
refreshing a display interface of the second electronic device based on the third motion data.

17. The method according to any one of claims 13 to 16, wherein the method further comprises:
receiving target motion data sent by the first electronic device; and
refreshing the display interface of the second electronic device based on the target motion data.

18. The method according to any one of claims 13 to 17, wherein the method further comprises:
receiving historical target motion data sent by the first electronic device; and
refreshing the display interface of the second electronic device based on the historical target motion data.

19. An electronic device, comprising: one or more processors; and one or more memories, wherein the one or more memories store one or more computer programs, the one or more computer programs comprise instructions, and when the instructions are executed by the one or more processors, the motion data synchronization method according to any one of claims 1 to 18 is performed.

20. A chip, wherein the chip comprises a processor and a communication interface, the communication interface is configured to receive a signal and transmit the signal to the processor, and the processor processes the signal, so that the motion data synchronization method according to any one of claims 1 to 18 is performed.

21. A readable storage medium, wherein the readable storage medium stores instructions, and when the instructions are run on an electronic device, the motion data synchronization method according to any one of claims 1 to 18 is performed.
